Europäisches Patentamt

European Patent Office

Office européen des brevets

(19)

(11) Veröffentlichungsnummer: **0 247 419**
**B1**

(12) **EUROPÄISCHE PATENTSCHRIFT**

(45) Veröffentlichungstag der Patentschrift:
14.03.90

(51) Int. Cl.⁴: **B65B 57/14**, B65G 47/86

(21) Anmeldenummer: 87106777.3

(22) Anmeldetag: 11.05.87

(54) Verfahren und Vorrichtung zur Übergabe von Packstücken wie Beutel, Blister oder dgl. von einer Verpackungsmaschine in eine Kartoniermaschine.

(30) Priorität: 22.05.86 DE 3617259

(43) Veröffentlichungstag der Anmeldung:
02.12.87 Patentblatt 87/49

(45) Bekanntmachung des Hinweises auf die Patenterteilung:
14.03.90 Patentblatt 90/11

(84) Benannte Vertragsstaaten:
BE CH FR GB LI NL

(56) Entgegenhaltungen:
DE-B- 1 581 087
US-A- 3 040 862
US-A- 3 517 477

(73) Patentinhaber: Otto Hänsel GmbH, Lister Damm 19,
D-3000 Hannover(DE)

(72) Erfinder: Kaplan, Horst, Pommernweg 2,
D-4800 Bielefeld 1(DE)
Erfinder: Grube, Gerhard, Im Felde 9,
D-4972 Löhne 4(DE)

(74) Vertreter: Patentanwälte Dipl.-Ing. Rudolf Bibrach
Dipl.-Ing. Elmar Rehberg, Postfach 1453 Pütterweg 6,
D-3400 Göttingen(DE)

**Beschreibung**

Die vorliegende Erfindung betrifft ein Arbeitsverfahren für eine Verpackungsanlage mit einer ersten und einer zweiten Packmaschine und einer Übergabeeinrichtung. Es wird gleichzeitig auch eine Verpackungsanlage zur Durchführung dieses Arbeitsverfahrens aufgezeigt.

Ein Arbeitsverfahren und eine entsprechende Vorrichtung der eingangs beschriebenen Art sind aus der DE-B 1 581 087 bekannt. Dabei ist eine erste Packmaschine mit einer zweiten Packmaschine über eine Übergabevorrichtung verbunden, die wiederum mit einem Vorratsschacht versehen ist. Die beiden Packmaschinen werden unabhängig voneinander mit ihren jeweiligen Arbeitsgeschwindigkeiten angetrieben. Wenn eine der beiden Packmaschinen gegenüber der anderen stillsteht oder infolge einer Störung nicht abgabe- bzw. aufnahmebereit ist, kann über den Vorratsschacht als Überlaufpuffer begrenzt weitergearbeitet werden. Um einen allzu großen Überlauf zu vermeiden, sind die an sich unabhängig voneinander gewählten Arbeitsgeschwindigkeiten der beiden Packmaschinen in etwa aneinander angepaßt. Wenn die zweite Packmaschine aufnahmebereit ist, wird jede über die Übergabevorrichtung herangeförderte Einzelverpackung nicht in den Vorratsschacht abgegeben, sondern der zweiten Packmaschine zugeführt. Ist die zweite Packmaschine nicht aufnahmebereit, wird die Einzelpackung in den Vorratsschacht eingelagert. Liefert dagegen die erste Packmaschine keine Einzelpackung, während die zweite Packmaschine aufnahmebereit ist, dann wird eine Einzelpackung aus dem Vorratsschacht der zweiten Packmaschine zugeleitet. Der Vorratsschacht kann auch auf der von der Übergabevorrichtung abgewandten Seite von Hand nachgefüllt werden. Wenn der Vorratsschacht leer ist, wird trotzdem eine von der ersten Packmaschine herangeförderte Einzelpackung bei Aufnahmebereitschaft der zweiten Packmaschine an diese abgegeben. Das Problem der Gruppenbildung von Einzelverpackungen in der zweiten Packmaschine und das Problem der Aussonderung von schadhaften oder nicht vollständig befüllten Einzelverpackungen wird hier nicht angesprochen.

Aus der US-A 30 40 862 sind Packmaschinen bekannt, mit denen eine Gruppenbildung der zunächst einzeln geförderten Einzelpackungen möglich ist. Es ist ein Vorratsschacht vorgesehen, der von oben beispielsweise von Hand mit Ersatzpackungen gefüllt werden kann. Wird dann eine fehlerhafte Einzelpackung herangefördert und erkannt, dann wird diese Einzelpackung aus dem Förderfluß herausgenommen und durch eine Einzelverpackung aus dem Vorratsschacht ergänzt. Auf diese Weise werden immer vollständige Gruppen von Einzelpackungen gebildet, jedenfalls solange, wie noch Ersatzpackungen in dem Vorratsschacht bevorratet sind oder wenn diese von Zeit zu Zeit während des Betriebs von Hand nachgefüllt werden.

Aus der US-A 35 17 477 ist eine Übergabevorrichtung bekannt, die mit mehreren Rotoren ausgestattet ist. Es ist auch die Verwendung von Saugern am Umfang der Rotoren dargestellt und beschrieben. Statt der Sauger können auch Greifeinrichtungen eingesetzt werden.

Der Erfindung liegt die Aufgabe zugrunde, ein Arbeitsverfahren und eine zugehörige Vorrichtung aufzuzeigen, mit denen es möglich ist, bei starrer Kopplung der beiden Packmaschinen Einzelpackungen zu Gruppen zu sammeln, wobei sichergestellt sein soll, daß Fehlverpackungen ersetzt werden und nur vollständige Gruppen von Einzelpackungen an die weitere Packmaschine abgegeben werden.

Erfindungsgemäß wird dies bei dem Arbeitsverfahren dadurch erreicht, daß die Arbeitstakte der ersten Packmaschine und der Übergabevorrichtung zum Arbeitstakt der zweiten Packmaschine in einem festen, während des laufenden Betriebs unveränderlichen Verhältnis stehen, daß bei Unterschreiten einer Mindestfüllmenge im Vorratsschacht statt Abgabe an die zweite Packmaschine eine geringe Anzahl der von der ersten Packmaschine abgegebenen Einzelpackungen in den Vorratsschacht eingelagert werden. Wenn die erste Packmaschine und die Übergabevorrichtung einerseits und die zweite Packmaschine andererseits in einem festen Verhältnis zueinander, welches durch die Gruppenbildung festgelegt ist, angetrieben werden und miteinander verbunden sind, besteht zunächst einmal die Möglichkeit, eine größere Leistung zu erzielen gegenüber solchen Packmaschinen, die getrieblich nicht miteinander fest gekoppelt sind. Bei Unterschreiten einer Mindestfüllmenge in dem Vorratsschacht findet eine bevorzugte Befüllung des Vorratsschachts statt, also beispielsweise bei Arbeitsbeginn, wenn der Vorratsschacht noch leer ist oder auch in jedem Zwischenstadium während des Verpackens einer Sorte von Einzelpackungen bzw. Gegenständen, wenn die Mindestfüllmenge im Vorratsschacht unterschritten ist. Die Mindestfüllmenge ist auf die Anzahl der Einzelpackungen in der Gruppe abgestimmt. Durch das Aussondern von Fehlpackungen werden dabei die von der ersten Packmaschine zur zweiten Packmaschine angelieferten Folgen von Einzelpackungen unvollständig. Diese dadurch entstehenden Fehlstellen werden aus dem Vorratsschacht ergänzt. Dies erfolgt solange, bis die Mindestfüllmenge im Vorratsschacht unterschritten wird. Es entfällt auch jegliches Nachfüllen des Vorratsschachts von Hand oder durch eine gesonderte maschinelle Nachfülleinrichtung. Die Übergabevorrichtung selbst wird ausschließlich zu Nachfüllzwecken benutzt. Das Auffüllen des Vorratsschachts erfolgt hier selbsttätig durch die Übergabevorrichtung und jeweils nur dann, wenn es erforderlich ist, so daß damit insgesamt eine hohe Packleistung an der Verpackungsanlage erreicht werden kann.

Es ist möglich, den Vorratsschacht bei Arbeitsende automatisch zu entleeren. Dies ist insbesondere dann von Bedeutung, wenn nacheinander verschiedene Produkte verarbeitet werden sollen, wobei auch durch andere Anzahlen von Einzelpackungen in der Gruppe die feste getriebliche Verbindung zwischen der ersten Packmaschine mit der Übergabevorrichtung und der zweiten Packmaschine geändert werden muß.

Eine Verpackungsanlage zur Durchführung des Arbeitsverfahrens nach Anspruch 1 kennzeichnet sich erfindungsgemäß dadurch, daß die Übergabevorrichtung drei in Hauptförderrichtung nacheinander geschaltete Rotoren aufweist, daß der erste Rotor eine Einrichtung zum Abwerfen schadhafter Einzelpackungen aufweist, und daß die Übergabestelle zwischen dem ersten und zweiten Rotor und die Übergabestelle zwischen Vorratsschacht und drittem Rotor so angeordnet sind, daß sie jeweils bezüglich des Arbeitsablaufs mit gleichem Drehwinkel vor der Übergabestelle zwischen dem zweiten und dem dritten Rotor liegen, wodurch es möglich ist, zwischen einer Übernahme einer Einzelpackung zwischen dem ersten und dem zweiten Rotor oder dem Vorratsschacht und dem dritten Rotor nach Bedarf zu wählen. Ein solcher Bedarf tritt dann auf, wenn eine Fehlstelle vorliegt, also eine schadhafte Einzelpackung zuvor aus der Übergabeeinrichtung ausgesondert wurde. Eine solche Vorrichtung kann natürlich auch anstelle von Saugern mit Greifern ausgebildet werden. Sauger haben den Vorteil, daß sie die Einzelpackungen unabhängig von deren Größe und sonstiger Ausbildung ergreifen können. Der für den Betrieb der Sauger erforderliche Unterdruck wird mittels entsprechender Ventile geschaltet. Die Ventile können vorzugsweise über einen Rechner angesteuert werden. Es ist dabei nicht erforderlich, das feste Verhältnis der Arbeitstakte der ersten Packmaschine und der Übergabeeinrichtung zum Arbeitstakt der zweiten Packmaschine zu ändern. Die Arbeitsgeschwindigkeit kann daher außerordentlich hoch gehalten werden. Die Sauger sind radial verfahrbar. Zu ihrer Steuerung können im Innern der Rotoren umlaufende Nockenwellen vorgesehen sein. Die Rotoren können selbst auch als ganzes verfahrbar sein, wobei ihr Drehantrieb beim Erfassen der Einzelpackungen kurzzeitig stillsteht.

Die Vorrichtung hat den besonderen Vorteil, daß sie außerordentlich kurz baut und der Platzbedarf sehr gering ist. Nachgeschaltete, gesonderte Aggregate, etwa zum Nachfüllen von Einzelpackungen in den Vorratsschacht, sind nicht mehr erforderlich. Hierzu wird die Übergabevorrichtung selbst ausschließlich benutzt. Durch das Aussondern von fehlerhaften Einzelpackungen und das Einschieben von Einzelpackungen aus dem Vorratsschacht in den Rhythmus werden immer vollständige Gruppen gebildet, wobei eine sehr hohe Packleistung erzielbar ist.

Weitere Einzelheiten sind Gegenstand von Unteransprüchen.

Eine Ausführungsform der für die Durchführung des Arbeitsverfahrens geeigneten Vorrichtung wird im Verlauf der nachfolgenden Beschreibung anhand der beiliegenden Zeichnungen im einzelnen erläutert. Dabei zeigen:

Figur 1 eine Seitenansicht auf die Verpackungsanlage in einer bevorzugten Ausführungsform und

Figuren 2 bis 12 ähnliche Seitenansichten der Verpackungsanlage, jedoch in unterschiedlichen Arbeitsstellungen.

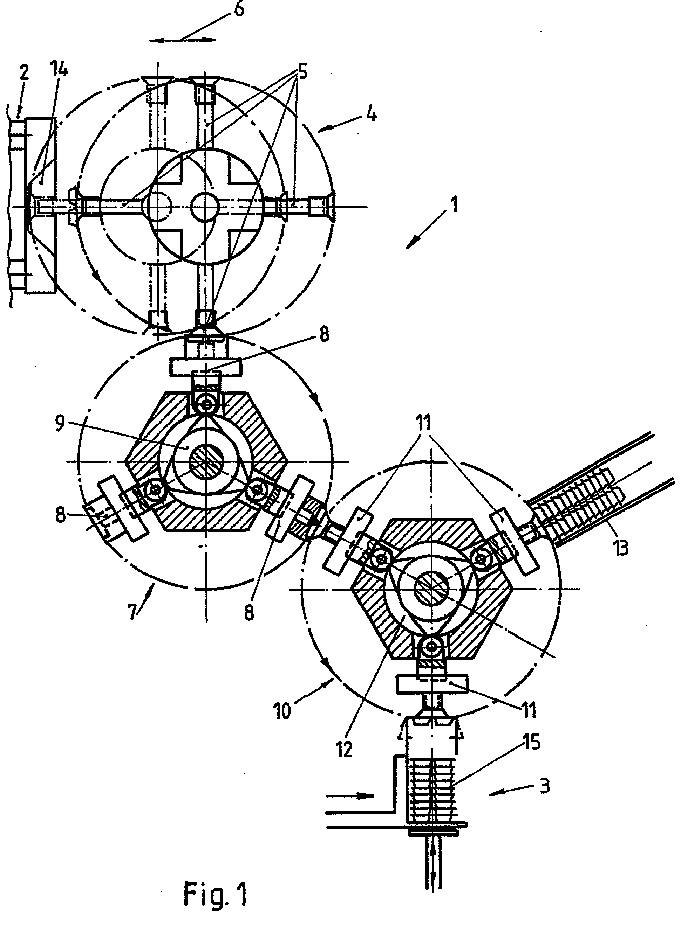

Figur 1 zeigt eine Seitenansicht auf die Übergabevorrichtung 1. Das Packstück wird von einer nicht weiter dargestellten ersten Packmaschine 2 abgegeben. Die Übergabe der Packstücke erfolgt auf eine ebenfalls nicht weiter dargestellte zweite Packmaschine 3. Die Packmaschinen 2 und 3 sind im wesentlichen von bekannter Bauart und bedürfen daher keiner weiteren Beschreibung. Festzuhalten ist jedoch, daß sie jeweils in einem bestimmten Arbeitstakt arbeiten, welcher während des laufenden Betriebs nicht verändert wird.

Die Übergabevorrichtung 1 weist ein nicht weiter dargestelltes Maschinengestell auf. Am Ende der Packmaschine 2 ist dabei im Maschinengestell eine als umlaufende Aufnahmevorrichtung umlaufender Rotor 4 vorgesehen. Dieser ist an seinem Umfang jeweils im Abstand von 90° mit vier Saugern 5 versehen. Zusätzlich zur Rotationsbewegung führt der Rotor 4 eine horizontale Bewegung in Richtung des Pfeils 6 aus.

Unterhalb des Rotors 4 ist ein Rotor 7 vorgesehen, welcher ebenfalls im Maschinengestell gelagert ist. über seinen Umfang verteilt sind im Abstand von 120° drei Sauger 8 vorgesehen, welche radial verschiebbar geführt sind. Zur Steuerung dieser Verschiebung ist im Innern des Rotors 7 eine Nockenwelle 9 vorgesehen.

Seitlich unterhalb des Rotors 7 ist ein weiterer Rotor 10 im Maschinengestell angeordnet, welcher im entgegengesetzten Sinn umläuft wie der Rotor 7. Auch dieser Rotor 10 ist am Umfang mit drei im Abstand von 120° angeordneten, radial verschiebbaren Saugern 11 versehen. Zur Steuerung dieser Sauger 11 ist im Innern des Rotors 10 eine Nockenwelle 12 vorgesehen. Die Rotoren 7 und 10 sind im wesentlichen gleich aufgebaut.

Im Bereich des Rotors 10 ist sowohl die weiterverarbeitende Packmaschine 3 als auch der Vorratsschacht 13 vorgesehen. Der Einfüllschacht der zweiten Packmaschine 3 sowie der Vorratsschacht 13 stehen dabei in einem Winkel von 120° zueinander.

Die Sauger 5, 8 und 11 sind jeweils in an sich bekannter Weise an Unterdruckleitungen angeschlossen, welche nicht weiter dargestellt sind und durch Ventile gesteuert werden können.

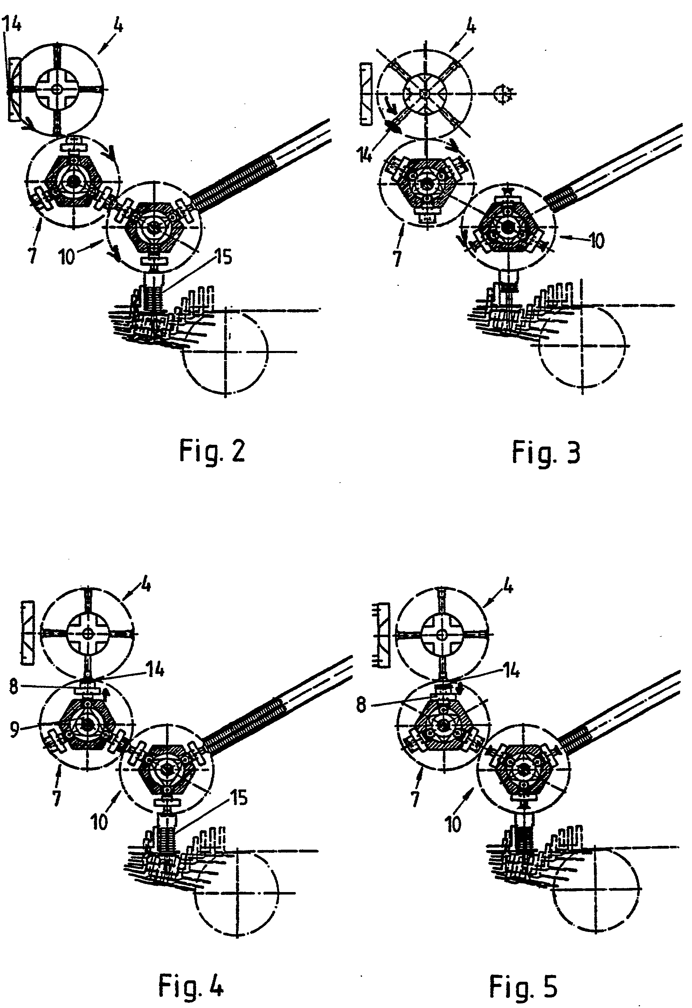

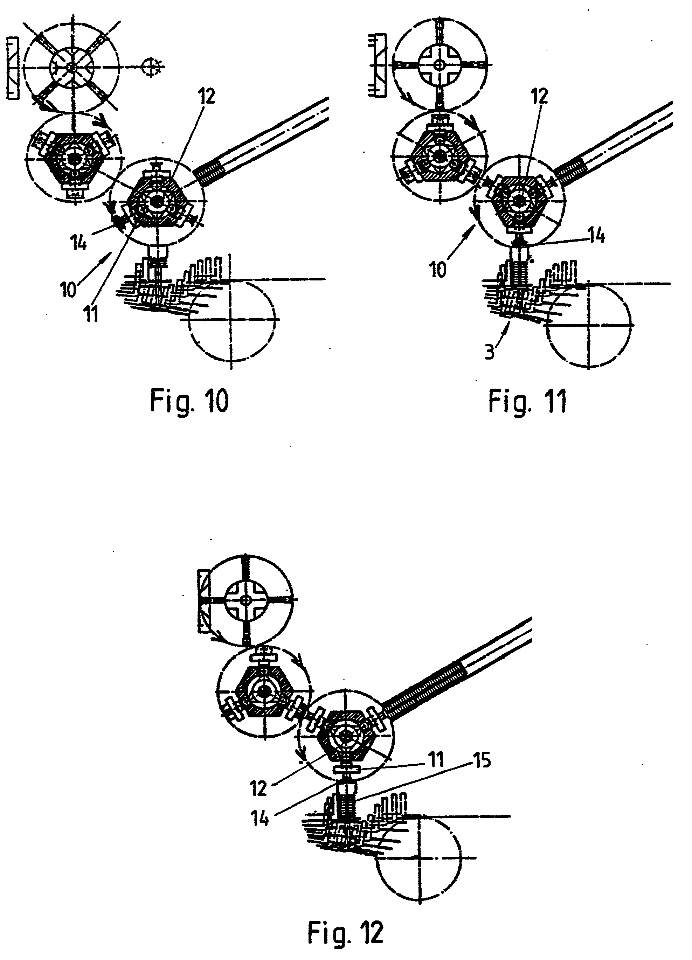

Die Arbeitsweise der Übergabevorrichtung 1 wird im Folgenden näher erläutert. Die Figuren 2 bis 12 zeigen dabei verschiedene Stellungen der Übergabevorrichtung 1, die beim Betrieb auftreten können.

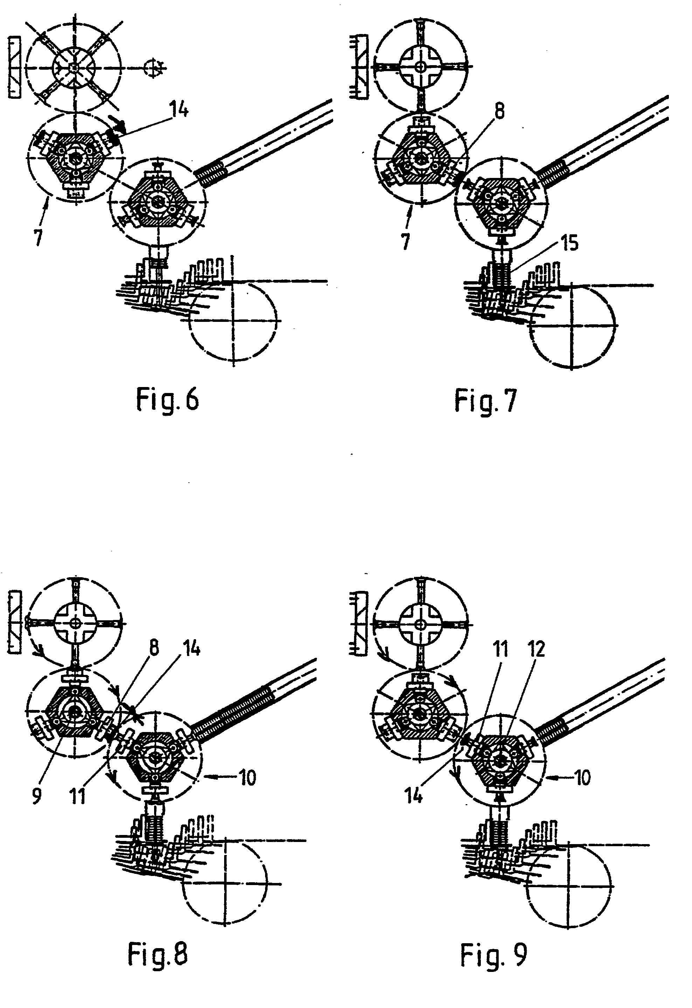

Die Einzelpackung 14 wird von der Packmaschine 2 abgegeben und von einem Saugstempel 5 des Rotors 4 erfaßt, wie es in Fig. 2 dargestellt ist. Der Rotor 4 dreht sich anschließend gegen den Uhrzeigersinn und bewegt sich in Richtung des Pfeiles 6 nach rechts, wie es in Fig. 3 gezeigt ist. Sobald die Stellung gemäß Fig. 4 erreicht ist, d.h. nach Drehung des Rotors 4 um 90 Grad, wird die Einzelpackung 14 auf den Sauger 8 des Rotors 7 übergeben. Dieser befindet sich dabei in der vorgeschobenen Stellung, was durch die Nockenwelle 9 gesteuert wird. Durch Drehung der Nockenwelle 9 wird der Sauger mit der angesaugten Einzelpackung 14 eingezogen, wie es in Fig. 5 dargestellt ist. Daraufhin dreht sich der Rotor 7 im Uhrzeigersinn gemäß Figur 6, bis die Stellung in Figur 7 erreicht wird. Der Sauger 8 befindet sich hier in der eingefahrenen Position und wird nun durch Drehung der Nockenwelle 9 ausgefahren, wie es in Figur 8 sichtbar ist. In dieser Stellung wird die Einzelpackung 14 an den Sauger 11 übergeben, welcher sich gemäß Figur 8 in der ausgefahrenen Position befindet. Durch Drehung der Nockenwelle 12 wird der Sauger 11 eingefahren, so daß sich der Rotor 10 gegen den Uhrzeigersinn um 120° dreht. Bei diesem Vorgang werden die in den Figuren 9, 10 und 11 dargestellten Positionen durchlaufen. Der Sauger 11 mit der Einzelpackung 14 befindet sich nun über der Kartoniermaschine (zweite Packmaschine) in seiner eingefahrenen Position. Durch Drehung der Nockenwelle 12 wird der Sauger 11 ausgefahren und die Einzelpackung 14 in einen Karton 15 in der Kartoniermaschine abgelegt. Der Arbeitsvorgang kann nunmehr erneut von vorn beginnen.

Wenn nun die Packmaschine eine fehlerhafte Einzelpackung abgibt, wird dies von der Aufnahmevorrichtung ausgeworfen, bevor der Sauger 8 des Rotors 7 erreicht ist. Stattdessen wird eine Einzelpackung 14 aus dem Vorratsschacht 13 mit Hilfe eines Saugers 11 am Rotor 10 erfaßt. Die Stellung der Übergabevorrichtung 1 entspricht dabei der in Figur 4 dargestellten, wobei auch der weitere Arbeitsvorgang dem bereits oben beschriebenen entspricht. Die fehlerhafte Einzelpackung wird demzufolge durch eine aus dem Vorratsschacht 13 ersetzt, ohne daß dabei die Vorrichtung angehalten werden müßte, so daß eine Leistungsminderung nicht auftritt.

Das Auffüllen des Vorratsschachts 13 erfolgt ebenfalls selbsttätig, wobei im wesentlichen der bereits oben geschilderte Vorgang abläuft. Die Einzelpackung wird hierbei jedoch nicht in der zweiten Packmaschine 3 abgelegt, sondern wird mit dem Rotor 10 weitergedreht und vom Sauger 11 in den Vorratsschacht 13 gedrückt.

Die Steuerung der geschilderten Arbeitsvorgänge erfolgt mit Hilfe von nicht weiter dargestellten Ventilen in den Unterdruckleitungen der Sauger. Die Ansteuerung der Ventile erfolgt dabei zweckmäßigerweise durch einen Rechner. Die Übergabevorrichtung 1 ist dadurch in einfacher Weise auf verschiedene Betriebszustände einzustellen. So wird beispielsweise bei Arbeitsbeginn zunächst der Vorratsschacht 13 automatisch aufgefüllt, bis dort eine voreingestellte Anzahl von Einzelpackungen vorhanden ist. Bei Arbeitsende läßt sich der Vorratsschacht 13 automatisch entleeren, was insbesondere bei einem Wechsel auf ein anderes Produkt erforderlich ist. Während des Betriebs wird der Vorratsschacht aufgefüllt, sobald dort eine voreingestellte Mindestzahl von Einzelpackungen unterschritten wird. All diese Vorgänge erfolgen dabei voll automatisch, ohne daß an irgendeiner Stelle Eingriffe von Hand erforderlich sind.

**Patentansprüche**

1. Arbeitsverfahren für eine Verpackungsanlage mit einer ersten und einer zweiten Packmaschine und einer Übergabevorrichtung zum Übergeben von Einzelpackungen von der ersten an die zweite Packmaschine und zum Ersetzen schadhafter Einzelpackungen, und mit einem Vorratsschacht für die Einzelpackungen, in welchen von der gleichen Schachtseite durch die Übergabevorrichtung Einzelpackungen eingelagert und zum Ersetzen von Einzelverpackungen an Fehlstellen abgezogen werden, dadurch gekennzeichnet, daß die Arbeitstakte der ersten Packmaschine und der Übergabevorrichtung zum Arbeitstakt der zweiten Packmaschine in einem festen, während des laufenden Betriebs unveränderlichen Verhältnis stehen, daß bei Unterschreiten einer Mindestfüllmenge im Vorratsschacht statt Abgabe an die zweite Packmaschine eine geringe Anzahl der von der ersten Packmaschine abgegebenen Einzelpackungen in den Vorratsschacht eingelagert werden.

2. Verfahren nach Anspruch 1, dadurch gekennzeichnet, daß bei Arbeitsbeginn Einzelpackungen von der Übergabevorrichtung (1) automatisch in den Vorratsschacht (13) überführt werden, bis dort eine Mindestfüllmenge verfügbar ist, und ein automatisches Nachfüllen des Vorratsschachts (13) erst dann erfolgt, wenn die Mindestfüllmenge unterschritten wird.

3. Verpackungsanlage zur Durchführung des Arbeitsverfahrens nach Anspruch 1 oder 2, mit einer ersten (2) und zweiten Packmaschine (3) und einer Übergabevorrichtung (1) zum Übergeben von Einzelpackungen von der ersten an die zweite Packmaschine und zum Ersetzen schadhafter Einzelpackungen, und mit einem Vorratsschacht (13) für die Einzelpackungen, in welchen von der gleichen Schachtseite durch die Übergabevorrichtung Einzelpackungen eingelagert und zum Ersetzen von Einzelpackungen an Fehlstellen ohne Unterbrechung des Arbeitsflusses abgezogen werden, dadurch gekennzeichnet, daß die Übergabevorrichtung (1) drei in Hauptförderrichtung nacheinander geschaltete Rotoren (4, 7, 10) aufweist, daß der erste Rotor (4) eine Einrichtung zum Abwerfen schadhafter Einzelpackungen aufweist, und daß die Übergabestelle zwischen dem ersten und zweiten Rotor (4, 7) und die Übergabestelle zwischen Vorratsschacht (13) und drittem Rotor (10) so angeordnet sind, daß sie jeweils bezüglich des Arbeitsablaufs mit gleichem Drehwinkel vor der Übergabestelle zwischen dem zweiten und dem dritten Rotor (7, 10) liegen, wodurch es möglich ist, zwischen einer Übernahme einer Einzelpackung (14) zwischen dem ersten und dem zweiten Rotor (4, 7) oder dem Vorratsschacht (13) und dem dritten Rotor (10) nach Bedarf zu wählen.

4. Übergabevorrichtung nach Anspruch 3, dadurch gekennzeichnet, daß ein oder mehrere gleichartige Rotoren (4, 7, 10) vorgesehen sind, an denen die Sauger im definierten Winkelabstand von z.B. 120° angeordnet sind.

5. Übergabevorrichtung nach Anspruch 3 und 4, dadurch gekennzeichnet, daß jeder Sauger einzeln und unabhängig von den anderen mit Überdruck beaufschlagbar ist.

6. Übergabevorrichtung nach Anspruch 3 bis 5, dadurch gekennzeichnet, daß die Ansteuerung der Sauger mit Unterdruck über von einem Rechner gesteuerte Ventile erfolgt.

**Revendications**

1. Procédé de travail pour une installation d'emballage avec une première et une deuxième machine d'emballage et un dispositif de transfert pour transférer des emballages individuels à partir de la première machine vers la deuxième machine d'emballage et pour remplacer les emballages individuels endommagés, et avec un casier de réserve pour les emballages individuels, dans lequel les emballages individuels sont, par le même côté du casier de réserve, mis en réserve par le dispositif de transfert et en sont retirés pour le remplacement des emballages individuels aux endroits ou il y a un manquant, caractérisé en ce que la cadence de travail de la première machine d'emballage et du dispositif de transfert se trouvent, pendant le fonctionnement courant, dans un rapport invariable avec la cadence de travail de la deuxième machine d'emballage, et en ce que, au cas ou n'est pas atteinte une quantité minimum de remplissage dans le casier de réserve, au lieu d'être transférés à la deuxième machine d'emballage, un petit nombre des emballages individuels débités par la première machine sont mis en réserve dans le casier de réserve.

2. Procédé selon la revendication 1, caractérisé en ce que, lors du commencement du travail, les emballages individuels sont automatiquement transférés par le dispositif de transfert dans le casier de réserve (13), jusqu'à ce qu'une quantité minimum de remplissage y soit disponible, et en ce qu'un remplissage complémentaire du casier de réserve (13) n'a lieu que quand son contenu devient inférieur à la quantité minimum de remplissage.

3. Installation d'emballage pour la mise en œuvre du procédé de travail selon la revendication 1 ou 2, avec une première (2) et une deuxième (3) machine d'emballage et un dispositif de transfert (1) pour transférer les emballages individuels à partir de la première machine vers la deuxième machine et pour remplacer les emballages individuels endommagés, et avec un casier de réserve (13) pour les emballages individuels, dans lequel, par le même côté du casier, les emballages individuels y sont mis en réserve et en sont retirés par le dispositif de transfert pour remplacer les emballages aux endroits ou il y a des manquants, sans interrompre le déroulement du travail, caractérisée en ce que le dispositif de transfert (1) présente trois rotors (4, 7, 10) disposés à la suite l'un de l'autre dans le sens principal du transport, en ce que le premier rotor (4) présente un dispositif d'éjection des emballages individuels endommagés, et en ce que le poste de transfert entre le premier et le deuxième rotor (4, 7) et le poste de transfert entre le casier de réserve (13) et le troisième rotor (10) sont disposés de telle sorte qu'ils se trouvent toujours avec le même angle de rotation par rapport au sens de déroulement du travail, devant le poste de transfert entre le deuxième et le troisième rotor (7, 10), ce qui permet de choisir, selon les besoins, entre la prise d'un emballage individuel (14) entre le premier et le deuxième rotor (4, 7) ou entre le casier de réserve (13) et le troisième rotor (10).

4. Dispositif de transfert selon la revendication 3, caractérisé en ce que sont prévus un ou plusieurs rotors (4, 7, 10) de même type, sur lesquels les ventouses d'aspiration sont réparties avec un écartement angulaire défini, par exemple de 120°.

5. Dispositif de transfert selon la revendication 3 ou 4, caractérisé en ce que chaque ventouse peut être soumise à une surpression individuellement et indépendamment des autres ventouses.

6. Dispositif de transfert selon les revendications 3 à 5, caractérisé en ce que la commande de la mise en dépression des ventouses a lieu par l'intermédiaire de vannes commandées par un ordinateur.

**Claims**

1. Working method for a packaging plant with a first and a second packaging machine and a transfer device for the transfer of individual packagings from the first to the second packaging machine and for the replacement of faulty individual packings and with a reservoir shaft for the individual packings, in which shaft individual packings are put into storage and drawn off at the same shaft side for the replacement of individual packings at fault locations by the transfer device, characterised thereby, that the operating cycles of the first packaging machine and the transfer device stand in a fixed relation, which is not variable while the operation is running, to the working cycle of the second packaging machine and that when a minimum filling quantity is fallen below in the reservoir shaft, instead of delivery to the second packaging machine, a small number of the individual packings delivered by the first packaging machine is put into storage in the reservoir shaft.

2. Method according to claim 1, characterised thereby, that at the start of operation, individual packings are automatically transferred by the transfer device (1) into the reservoir shaft (13) until a minimum filling quantity is available there and an automatic replenishing of the reservoir shaft (13) takes place only when the minimum filling quantity is fallen below.

3. Packaging plant for the performance of the working method according to claim 1 or 2 with a first (2) and a second (3) packaging machine and a transfer device (1) for the transfer of individual packings from the first to the second packaging machine and for the replacement of faulty individual packings and with a reservoir shaft (13) for the individual packings, in which shaft individual packings are put into storage and drawn off at the same shaft side for the replacement of individual packings at fault locations by the transfer device without interrupting the flow of work, characterised thereby, that the transfer device (1) displays three rotors (4, 7, 10) connected one behind the other in main conveying direction, that the first rotor (4) displays an equipment for the discarding of faulty individual packings and that the transfer location between the first and the second rotor (4, 7) and the transfer location between the reservoir shaft (13) and the third rotor (10) are so arranged that they each with respect to the course of operation lie at the same angle of rotation before the transfer location between the second and the third rotor (7, 10), whereby it is possible to choose according to need between a take-over of an individual packing between the first and the second rotor (4, 7) or between the reservoir shaft (13) and the third rotor (10).

4. Transfer device according to claim 3, characterised thereby, that one or more rotors (4, 7, 10) of like kind are provided, at which the suckers are arranged at a defined angular spacing of, for example, 120°.

5. Transfer device according to claim 3 and 4, characterised thereby, that each sucker is chargeable with excess pressure individually and independently of the others.

6. Transfer device according to claim 3 to 5, characterised thereby, that the driving of the suckers by underpressure takes place by way of valves controlled by a computer.

Fig. 1

Fig. 2

Fig. 3

Fig. 4

Fig. 5

Fig. 6

Fig. 7

Fig. 8

Fig. 9

Fig. 10

Fig. 11

Fig. 12